# FASCICULE DE BREVET EUROPEEN

(11) **EP 1 891 179 B1**
(45) Date de publication et mention de la délivrance du brevet: **24.04.2013**
(21) Numéro de dépôt: 06764793.3
(22) Date de dépôt: 15.06.2006
(51) Int. Cl.: C09K 8/03, C09K 8/12

(54) **FLUIDE DE FORAGE COMPRENANT UN POLYMERE ET UTILISATION DU POLYMERE DANS UN FLUIDE DE FORAGE**
BOHRSCHLAMM MIT POLYMER UND VERWENDUNG DES POLYMERS ALS ZUSATZ ZU EINEM BOHRSCHLAMM
DRILLING FLUID COMPRISING A POLYMER AND USE OF THE POLYMER IN A DRILLING FLUID

(30) Priorité: 15.06.2005 FR 0506057
(43) Date de publication de la demande: 27.02.2008
(73) Titulaire: RHODIA CHIMIE, 93300 Aubervilliers (FR)
(72) Inventeur: KARAGIANNI, Katerina, F-75013 Paris (FR); LABEAU, Marie-Pierre, Burlington, NJ 08016 (US); DEBLOCK, Elise, F-75004 Paris (FR)
(74) Mandataire: Lavé, Stéphanie
(86) Numéro de dépôt international: PCT/FR2006/001358
(87) Numéro de publication internationale: WO 2006/134273

(56) Documents cités:
- DE-C1- 10 122 613
- FR-A- 2 749 853
- GB-A- 707 646
- GB-A- 1 247 230
- GB-A- 2 216 574
- US-A- 5 099 930

## Description

Lors d'opérations de forage de puits, notamment de puits destinés à récupérer des gisements sous terrains de pétrole et/ou de gaz, on utilise des fluides de forage destinés à lubrifier, nettoyer et refroidir les outils de forage et la tête de forage, et/ou à évacuer la matière dégagée lors du forage (roches déblayées). Les fluides de forage sont aussi utilisés pour nettoyer les puits. Ils fournissent également la pression nécessaire pour supporter la paroi du puits avant consolidation. Les fluides sont usuellement appelés «boues de forage». Après le forage, les parois du puits sont généralement consolidées par un matériau cimentaire.

Lors du forage, les parois de la roche, en particulier de roches argileuses sensibles à l'eau, ont tendance à gonfler. Des problèmes opérationnels sont liés à ces argiles. Le gonflement peut gêner l'écoulement du fluide ou le passage de l'outil de forage. De plus, le gonflement peut mener à une désagrégation de la paroi. Cette désagrégation peut causer des irrégularités dans le puits et ainsi créer des points de faiblesse mécanique.

D'autre part, la matière argileuse désagrégée est libérée dans le fluide et peut poser des problèmes de contrôle de la viscosité du fluide: les matières argileuses, en présence ou non d'une concentration importante en sels (saumure), ont tendance à augmenter fortement la viscosité. Cette augmentation peut être néfaste: si elle devient trop importante, la circulation du fluide peut être gênée et ce dernier ne remplit alors plus ses fonctions.

Par ailleurs, les roches argileuses déblayées peuvent avoir tendance à s'agréger dans le fluide de forage. On parle d'un phénomène d'accrétion. L'accrétion peut gêner la circulation des fluides, et peut bloquer mécaniquement la tête de forage (phénomène de «bit-balling»).

Pour résoudre les problèmes de gonflement des argiles et de désagrégation des parois, il est connu d'ajouter dans les fluides de forage des polymères destinés à consolider les parois («well bore consolidation»). On utilise ainsi de manière courante, entre autres, des polyacrylamides partiellement hydrolysés (PHPA, «partially hydrolyzed polyacrylamide»). On pense que ces polymères forment un film polymérique à la surface des parois, encapsulent plus ou moins les roches déblayées, et inhibent ainsi l'hydratation et/ou la désagrégation des argiles. Les performances de ces polymères sont toutefois limitées, car ils ont tendance à rendre les fluides trop visqueux à forte concentration. Les performances de ces polymères sont de plus limitées dans des conditions de forage haute température haute pression (HTHP).

Par ailleurs, on sait que d'autres polymères peuvent être ajoutés dans des fluides de forage, par exemple pour moduler les propriétés rhéologiques, notamment en présence de sels. Quelques études ont ainsi été menées sur des copolymères comprenant des unités de type bétaïne, et souvent des unités acrylamides.

Ainsi, il est décrit dans le document WO 00/01746 (Institut Français du Pétrole) des copolymères à base de d'acrylamide et de sulfobétaïnes ou de phosphobétaïnes. Il est indiqué dans ce document que ces copolymères sont efficaces comme agents viscosants, et comme agents modificateurs de la surface de particules en suspension.

Des législations de plus en plus contraignantes visent à limiter l'utilisation des polymères comprenant des unités acrylamides. De tels polymères ne pourront peut-être plus être utilisés dans certains pays, à plus ou moins brève échéance. Des solutions de remplacement sont nécessaires.

Le document US 5,026,490 décrit d'autres copolymères comprenant des unités sulfobétaïne, et leur utilisation comme agents défloculants de boues de forage. Le document US 6,346,588 décrit d'autres copolymères comprenant des unités sulfobétaïne, dont la formulation dans un fluide de forage est facilitée. Le document US 4,607,076 décrit d'autres copolymères comprenant des unités sulfobétaïne, et leur utilisation comme agents viscosants en présence de saumure.

Le document US 5 099 930 décrit des compositions de fluides de forage comprenant entre autre un polyglycol de masse moléculaire allant de 1200 à 10000 utilisé en particulier comme agent lubrifiant.

Le document DE 101 22 613 décrit l'utilisation de polymère hydroxylé, de masse moléculaire entre 1000 et 100 000 g/mol, comprenant de 1 à 99 mol% d'unités -CH₂-CHOH- dans un fluide de forage aqueux, comme inhibiteur de formation d'hydrates (inhibiteur d'accrétion).

Le document GB 2 216 574 décrit l'utilisation de polymère hydroxylé (polyglycérol) dans un fluide de forage aqueux, entre autre comme inhibiteur de formation d'hydrates (inhibiteur d'accrétion). Le fluide de forage comprend entre 1 et 40% en poids, de préférence entre 5 et 30%, de polyglycérol.

Pour résoudre les problèmes de gonflement des argiles et de désagrégation des parois, il est également connu d'ajouter dans les fluides de forage des silicates, destinés à consolider les parois («well bore consolidation»). On parle alors de fluides à base de silicate ou de boues à base de silicates.

Les agents connus pour inhiber le gonflement des argiles peuvent toutefois favoriser l'accrétion. En particulier les silicates ont tendance à augmenter les phénomènes d'accrétion. Par conséquent, il a été proposé d'ajouter à des fluides à base de silicates des additifs visant à limiter les phénomènes d'accrétion. Ainsi, le document WO 99/42539, propose d'ajouter des petites molécules présentant un groupe phosphonate et un groupe comprenant moins de 100 atomes, par exemple l'acide phosphonosuccinique. Les performances de ces additifs en matière d'inhibition de l'accrétion sont toutefois limitées, et on cherche à les améliorer.

La présente invention vise à résoudre au moins un des problèmes mentionnés ci-dessus.

Ainsi, la présente invention proprose de nouveaux fluides de forages, comprenant un polymère, ledit polymère comprenant au moins 65% en poids, de préférence au moins 90% en poids, d'unités hydroxylées comprenant un groupe -OH, de formule suivante:

-CH₂-CR⁶[-X²-R⁸]-

dans laquelle:
- R⁶ est un atome d'hydrogène ou un groupe méthyle,
- X² est un groupe de formule -CO-O-, -CO-NH- ou -C₆H₄-CH₂-
- R⁸ est un groupe hydrocarboné à au moins deux atomes de carbone, comprenant au moins deux groupes - OH, de préférence sur deux atomes de carbone consécutifs.

L'invention a également pour objet de proposer l'utilisation du polymère dans des fluides de forrage aqueux ou non aqueux, en particulier dans des fluides à base de silicates, en tant qu'agént:
- inhibiteur de gonflement des argiles
- en tant qu'agent réducteur de filtrat et/ou
- en tant qu'agent d'inhibition de l'accrétion (notamment inhibition des phénomènes de "bit-balling"), et/ou
- en tant qu'agent de contrôle de la rhéologie du fluide, et/ou
- en tant qu'agent de lubrification.

L'invention a également pour objet un procédé de forage dans lequel on met en ouvre un fluide de forage comprenant le polymère.

Le polymère peut notamment être utilisé à titre d'agent 2-en-1 ou plus, remplissant plusieurs des fonctions mentionnées ci-dessus, par exemple à titre d'agent inhibiteur de l'accrétion et lubrifiant. ,

L'invention concerne plus particulièrement un fluide de forage pour puits de pétrole et/ou de gaz, comprenant le polymère. Le fluide peut notamment être un fluide à base de silicates.

### Polymère

Le polymère utilisé dans le fluide de forage comprend au moins 65% en poids d'unités hydroxylées. Il comprend de préférence au moins 90% en poids, et plus préférablement encore au moins 95% en poids, de telles unités. Selon un mode préférentiel, le polymère est un homopolymère ne comprenant pas d'autres unités (0% en poids ou au plus 1% en poids) que les unités hydroxylées.

Sauf indications contraires, lorsqu'on parlera de masse molaire, il s'agira de la masse molaire moyenne en masse absolue, exprimée en g/mol. Celle-ci peut être déterminée par chromatographie de perméation de gel aqueux (GPC), par diffusion de lumière (DDL ou encore MALLS), avec un éluant aqueux ou un éluant organique (par exemple le diméthylacétamide, le diméthylformamide ...), selon la composition du polymère.

Dans la présente demande, on désigne par unité dérivant d'un monomère une unité qui peut être obtenue directement à partir dudit monomère par polymérisation. Ainsi, par exemple, une unité dérivant d'un ester d'acide acrylique ou méthacrylique ne couvre pas une unité de formule -CH₂-CH(COOH)-, -CH₂-C(CH₃)(COOH)-, -CH₂-CH(OH)-, respectivement, obtenue par exemple en polymérisant un ester d'acide acrylique ou méthacrylique, ou de l'acétate de vinyle, respectivement, puis en hydrolysant. Une unité dérivant d'acide acrylique ou méthacrylique couvre par exemple une unité obtenue en polymérisant un monomère (par exemple un ester d'acide acrylique ou méthacrylique), puis en faisant réagir (par exemple par hydrolyse) le polymère obtenu de manière à obtenir des unités de formule -CH₂-CH(COOH)-, ou -CH₂-C(CH₃)(COOH)-. Une unité dérivant d'un alcool vinylique couvre par exemple une unité obtenue en polymérisant un monomère (par exemple un ester vinylique), puis en faisant réagir (par exemple par hydrolyse) le polymère obtenue de manière à obtenir des unités de formule -CH₂-CH(OH)-.

Selon un premier mode de réalisation, les unités hydroxylées sont des unités de formule suivante:

-CH₂-CR⁶[-X²-R⁸]-

dans laquelle:
- R⁶ est un atome d'hydrogène ou un groupe méthyle,
- X² est un groupe de formule -CO-O-, --CO-NH- ou -C₆H₄-CH₂-
- R⁸ est un groupe hydrocarboné à au moins deux atomes de carbone, comprenant au moins deux groupes -OH, de préférence sur deux atomes de carbone consécutifs.

De telles unités peuvent être notamment choisies parmi les unités de formules suivantes: 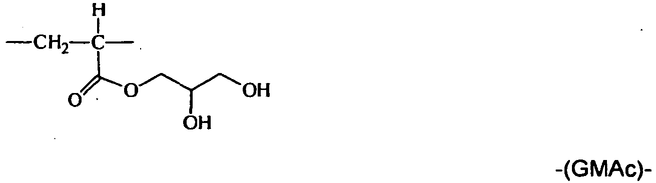 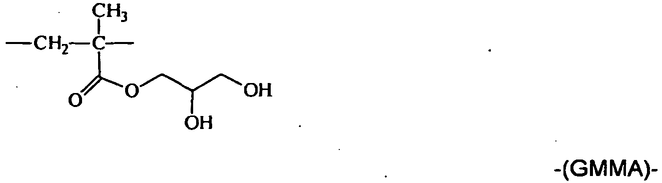 A titre d'exemples de monomères conduisant à de telles unités après (co)polymérisation on peut citer le glycérol monoacrylate (GMAc) ou encore le glycérol monométhacrylate (GMMA, commercialisé par Röhm) : 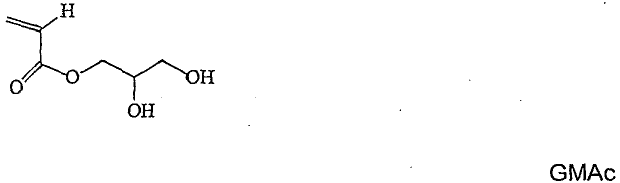 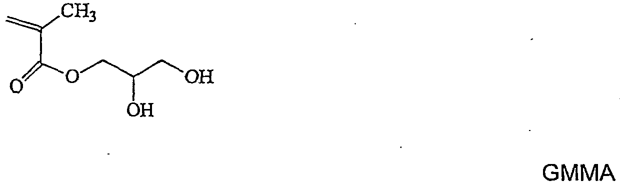 Les unités hydroxylées peuvent également être obtenues par modification chimique d'un polymère précurseur contenant, par exemple, des motifs époxy : 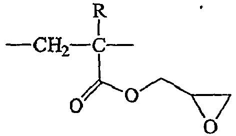 où R est un atome d'hydrogène ou un groupe méthyle.
A titre d'exemples de monomères conduisant à de telles unités après polymérisation on peut citer le glycidyl acrylate (GA) ou encore le glyciyl méthacrylate (GMA):

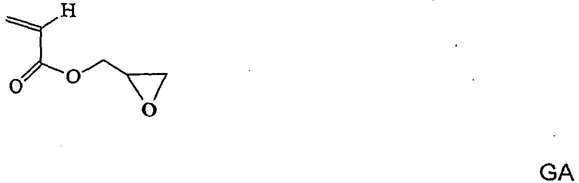

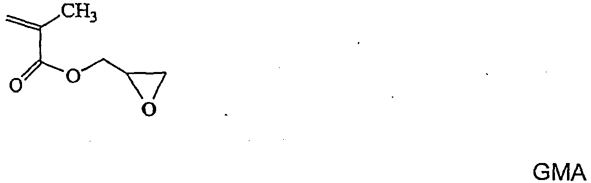

On peut également opérer par estérification ou trans-estérification d'un polymère d'acide acrylique ou d'acide méthacrylique avec de la glycérine.

On peut notamment utiliser un homopolymère de GMMA, le polyGMMA (CAS 28474-30-8) ou glycéryle de polyméthacrylate. Un tel polymère est notamment commercialisé par Guardian, sous la dénomination Lubragel BP

Alternativement, on peut utiliser un homopolymère de GMAc, le polyGMAC ou glycéryle de polyacrylate. Un tel polymère est notamment commercialisé par Cognis sous la dénomination Hispagel.

Selon un deuxième mode de réalisation, les unités hydroxylées sont des unités de formule suivante:

-CH₂-CHOH-

Selon ce mode de réalisation le polymère est un polymère à base d'alcool polyvinylique.

La masse molaire moyenne en masse du polymère est de préférence comprise entre 1000 g/mol et 400000 g/mol (valeur relative, calibrée en GPC aqueuse avec des étalons de polyoxyde d'éthylène), de préférence entre 2000 g/mol et 20000 g/mol. La masse molaire moyenne en masse absolue peut être de préférence comprise entre 2000 et 4000000 g/mol.

### Fluide de forage

Il peut s'agir d'un fluide aqueux ou non aqueux. In peut s'agir d'un fluide aqueux, à base de silicates (ou "boue à base de silicates"), ou sans silicates. Il peut s'agir d'un fluide aqueux, à base de phosphates, ou sans phosphates. Il s'agit de préférence d'un fluide à base de silicates.

La teneur en polymère dans le fluide de forage est avantageusement comprise entre 0,1 % et 10% en poids, de préférence entre 0,1 % et 5%, et encore plus préférablement entre 1 % et 3%.

On décrit brièvement ci-dessous ce que sont les opérations de forage.

Les opérations de forage consistent à creuser un trou au moyen d'un trépan en carbure de tungstène notamment, fixé à des tiges creuses vissées bout à bout. Le plus souvent, de la boue, ou fluide de forage, comprenant des additifs dans un.vecteur liquide, est injectée dans le train de tiges. Cette boue remonte ensuite par le trou de sonde, extérieurement aux tiges, et entraîne des éléments de roches détachés lors de l'opération de forage. Dans le même temps, la boue chargée des roches établit une contre pression qui consolide le trou. La boue est ensuite extraite du trou de forage pour être débarrassée des roches qu'elle contient avant d'être injectée à nouveau dans les tiges creuses de forage.

Dans de telles conditions de mise en oeuvre, des additifs ajoutés à la boue confèrent à celle-ci un comportement rhéologique particulier. En effet, lorsqu'il est soumis à de très fortes contraintes de cisaillement et des températures élevées, ainsi que c'est le cas au niveau du trépan, le fluide doit avoir une viscosité suffisamment faible pour faciliter son évacuation vers l'extérieur des tiges creuses. Par contre, ce même fluide, chargé des roches, doit présenter une viscosité élevée afin de maintenir en suspension les déblais entraînés lors du forage.

Les fluides de forage (boues) sont connus de l'homme du métier. La composition exacte du fluide peut dépendre de la destination du fluide. Elle peut dépendre notamment des températures et pressions auxquelles le fluide sera soumis, de la nature des roches traversées par le puits, et de la nature des équipements de forage.

Les fluides de forages comprennent généralement un vecteur liquide et des additifs dissous ou dispersés dans le vecteur liquide. Les agents de consolidation des parois du puits et les agents réducteurs de filtrats sont de tels additifs.

Le vecteur liquide peut être de l'eau (le fluide de forage étant une composition à base d'eau comprenant des additifs dissous ou dispersés dans l'eau). Dans ce cas, on parle souvent de « boue à l'eau ». On mentionne que l'eau est souvent de l'eau de mer. Selon un mode particulier, le vecteur liquide est un vecteur à base de silicates ("boue à base de silicates"). Les boues à base de silicates sont une catégorie de boues à l'eau, comprenant des silicates. Elles sont connues de l'homme du métier. Ces boues sont très efficaces en terme de protection des agriles sensibles à l'eau, elles ne sont pas très coûteuses et sont considérées comme ayant un faible impact sur l'environnent. Elles sont capables à boucher des fissures des argiles de la taille de quelque nanomètres jusqu'à des dizaines de micromètres. Néanmoins, elles présentent des inconvénients en terme d'accrétion des déblais et blocage des têtes de forage ("bit-balling"). Un autre inconvénient est le haut pH d'opération (autour de 12), qui induit des risques en terme de sécurité des conditions de travail et/ou d'impact sur l'environnement, ainsi qu'une mauvaise lubrification. Des silicates liquides de sodium ou potassium sont des solutions des verres hydrosolubles de la formule chimique M₂Oₙ(SiO₂) , où M peut être Na+ or K+ et n est le ratio molaire (le nombre de molécules SiO₂ pour une molécule M₂O). n varie de préférence de 1,5 à 3,3 pour des produits commerciaux. Dans des fluides de forage, le ratio 2,0 est typiquement utilisé. On pense que les silicates protégent les argiles natives sensibles à l'eau, vis-à-vis de l'invasion d'eau par deux mécanismes:
- gélification: le fluide dans les pores des argiles à un pH a peu près du neutre. Quand les oligomères des silicates sont amenés à ce pH, ils polymérisent et forment des réseaux tridimensionnels.
- Précipitation: le fluide dans les pores des argiles contient des cations Ca2+ et Mg2+ qui interagissent avec les oligomères des silicates pour former des précipités insolubles.

Le vecteur liquide peut également être une émulsion eau dans huile. Dans ce cas on parle souvent de « boue à l'huile ». Ces dernières sont plus coûteuses que les boues à l'eau, mais peuvent être préférées dans le cas de forage de puits très profonds (conditions de forage HPHT; haute pression haute températures). Le polymère peut être utilisé avec les deux types de vecteurs. Toutefois, les vecteurs à base d'eau (boues à l'eau) sont préférés, en particulier les vecteurs à base de silicates (boues à base de silicates).

Le polymère peut entrer dans la composition du fluide de forage en remplacement ou en complément d'un agent de consolidation des parois du puits (well bore consolidation) et/ou d'agents réducteurs de filtrat et/ou d'agents de lubrification, et/ou d'agents d'inhibition de l'accrétion.

Parmi les additifs qui peuvent être compris dans les fluides de forage, outre les agents de consolidation des parois et/ou les agents réducteurs de filtrat, on cite:
- les agents de contrôle de la rhéologie: il peut s'agir d'agents rendant le fluide viscoélastique, de rhéofluidifiants, d'agents épaississants. On cite par exemple les polysaccharides, comme le guar ou l'amidon, les gommes xanthane, et les dérivés de ces composés.
- les agents de contrôle de la force ionique du fluide. Il s'agit par exemple de sels.
- les émulsifiants, dans les boues à huile en particulier, par exemple les émulsifiants décrit dans la demande de brevet WO 01/94495.
- les dispersants.
- les agent anti-tartre, par exemple des polymères comprenant des unités dérivées de l'acide acrylique ou de l'acide vinyl sulfonique, ou de l'acide vinyl phosphonique.
- les agents de contrôle de la densité du fluide, par exemple du sulfate de Barium.
- des capteurs d'oxygène et/ou autres stabilisants chimiques.

On donne toutefois ci-dessous plus de détails quant à certains composés pouvant entrer dans la composition de fluides de forage.

Les fluides de forage peuvent comprendre des polyphosphates, des tannins, des lignosulfonates, des dérivés de lignine, des tourbes et lignites, des polyacrylates, des polynaphtalène sulfonates, seuls ou en mélange.

La quantité d'agent fluidifiant ou dispersant est variable. A titre indicatif, celle-ci peut être comprise entre 0 et 1 % par rapport au poids total du fluide.

Le fluide de forage selon l'invention peut comprendre en outre un capteur d'oxygène. Ce type d'additif a pour objet de piéger l'oxygène présent dans les boues de forages et qui peuvent entraîner une dégradation de certains additifs.

Parmi les produits de ce type, on peut citer par exemple les hydroxylamines, l'hydrazine, les sulfites, les bisulfites, les hydrosulfites, les borohydrures.

Selon un mode de réalisation particulier, on utilise l'hydrazine comme capteur d'oxygène car elle n'entraîne pas la formation de précipités insolubles favorisant l'apparition de bouchons dans le puits. L'hydrazine peut se trouver sous une forme anhydre ou hydratée, sous forme de sels comme par exemples les chlorure, sulfate, ou encore sous forme de carbohydrazide.

Généralement la teneur en additif de ce type varie entre 0 et 0,25%.

Le fluide de forage selon l'invention peut comprendre de plus, au moins un composé alourdissant et/ou au moins un colloïde minéral.

Les éléments alourdissants contribuent à maintenir une pression hydrostatique suffisante dans le puits et à maintenir en suspension les roches entraînées lors de l'opération de forage. De tels composés sont classiquement choisis parmi les sels solubles précédemment cités et les sels peu ou très peu solubles. Parmi les sels peu solubles, on peut citer sans intention de s'y limiter, les sulfates, silicates ou carbonates de métaux alcalino-terreux, comme le sulfate de baryum, le carbonate de calcium.

On peut de même utiliser des bromures de métaux alcalino-terreux ou de zinc tels que le bromure de potassium, le bromure de zinc. On peut aussi utiliser des oxydes ou sulfure ou sous arséniate de fer. On peut également utiliser le sulfate de strontium, voire dans certains cas de forte densité du Galene (sulfure de plomb).

Les colloïdes minéraux, qui sont des composés substantiellement insolubles dans les conditions d'utilisation du fluide selon l'invention, sont des agents modifiant la rhéologie du milieu et permettant de maintenir les déblais en suspension dans ce dernier. L'attapulgite, la baryte, la bentonite, seules ou en mélange, en sont les exemples les plus couramment utilisés. Il est à noter que si l'on met en oeuvre un fluide comprenant un colloïde minéral, ce dernier sera de préférence de l'attapulgite.

Les teneurs en alourdissants et en colloïdes minéraux dépendent de plusieurs facteurs qui ne sont pas uniquement techniques. En effet, si ces teneurs sont bien évidemment fixées en fonction de la nature des sols traversés, l'importance du coût engendré par l'usage de ces additifs est prise en compte (présence sur place ou non, coût, etc.).

Bien souvent, et toujours dans le but de minimiser les frais encourus, la préparation du fluide de forage est réalisée avec l'eau présente sur le site de forage. Ainsi, il n'est pas rare de se trouver en présence d'eau de formation (par opposition aux eaux de composition, c'est-à-dire aux eaux préparées dans un but particulier) chargées en sels, comme l'eau de mer, les eaux saumurées ou les eaux dures. Dans ce cas, la teneur en sels dans l'eau employée varie selon la provenance de celle-ci.

Il peut toutefois arriver que l'eau disponible soit de l'eau non ou peu chargée. Dans ce cas, il peut être approprié d'ajouter des sels, tels que des chlorures par exemple.

On peut également ajouter, si nécessaire, des sels minéraux pour favoriser la précipitation de certains ions, s'ils sont présents, et en particulier des ions divalents. On peut mentionner par exemple l'addition de carbonate de soude pour précipiter le calcium, ou le bicarbonate de soude pour précipiter la chaux, notamment lors de reforages dans le ciment On peut encore citer l'addition de gypse ou de chlorure de calcium pour limiter le gonflement des argiles, l'addition d'hydroxyde de calcium, ou de chaux éteinte, pour débicarbonater des boues contaminées par du dioxyde de carbone.

La teneur en sels est là encore fonction des roches traversées et des eaux disponibles sur le site d'exploitation et l'on peut effectuer les opérations en présence de fluides saturés en sels.

Bien évidemment le fluide de forage selon la présente invention peut comprendre des additifs habituels de la classe des polysaccharides de haut poids moléculaire, comme le succinoglycane, le wellan, le gellan, utiles en tant que viscosants.

D'autres additifs classiques pour des applications concernant l'exploitation de gisements pétroliers peuvent entrer dans la composition du fluide. Ainsi, on peut mentionner les agents de transfert de radicaux libres, comme les alcools inférieurs, les thiourées, l'hydroquinone ; les biocides, les agents chélatants, les tensioactifs, des anti-mousses, des agents anti-corrosion par exemple.

### Effets

### Agent d'inhibition de gonflement des argiles.

Lors du forage de puits, en particulier lors du forage de puits destinés à la récupération de pétrole et/ou de gaz, on foré souvent à travers de roches argileuses, en particulier à travers des argiles schisteuse («shale» en anglais). Ces roches ont tendance à gonfler au contact des fluides de forage, en particulier au contact de fluides aqueux. Le gonflement est une conséquence d'une pénétration du fluide dans les roches. Un tel gonflement pose plusieurs problèmes.

Le gonflement le long des parois du puits, crée des protubérances, ce qui gène la circulation du fluide de forage et des outils de forage. De plus le gonflement peut mener à une désagrégation, créant des aspérités le long des parois. Ces aspérités et protubérances peuvent créer de points de faiblesse mécanique du puits. La matière désagrégée est constituée de fines plaquettes qui peuvent altérer les propriétés rhéologiques du fluide, et ainsi gêner sa circulation.

Un agent d'inhibition du gonflement des argiles vise à empêcher la pénétration du fluide dans les roches le long des parois, à inhiber le gonflement et/ou la désagrégation. Il peut s'agir d'une consolidation des parois du puits («well bore consolidation»).

Les roches argileuses déblayées, en particulier les schistes argileux, en suspension dans les fluides, peuvent poser des problèmes. Ces roches en suspension peuvent gonfler, se désagréger, et modifier ainsi les propriétés rhéologiques des fluides, comme expliqué ci-dessus. Un agent d'inhibition du gonflement des argiles vise à empêcher la pénétration de l'eau dans les roches déblayées en suspension, et/ou à inhiber la désagrégation.

### Agent d'inhibition de l'accrétion

D'autre part, les roches en suspension ont tendance à s'agréger. On parle d'accrétion. Les agrégats formés peuvent gêner la circulation du fluide et des outils. Ils peuvent de plus venir envelopper la tête de forage et ainsi la bloquer (phénomène de «bit-balling» en anglais). Un agent d'inhibition de l'accrétion des roches forées déblayées vise à éviter ces phénomènes. On note qu'un agent usuel peut former un film, ou être adsorbé, à la surface de roches déblayées sans pour autant éviter leur agglomération (accrétion). Un agent d'inhibition du gonflement des argiles mal adapté peut même favoriser cette accrétion. C'est par exemple le cas des silicates. Il existe des besoins pour des agents inhibant l'accrétion.

### Réducteur de filtrats

La réduction du filtrat est l'évitement de la perte de fluide dans le puits par infiltration dans les roches. La perte de fluide est à éviter pour des raisons économiques (coût du fluide), pour des raisons de sécurité, et pour des raisons de productivité. En effet, si le fluide vient à faire défaut, les outils de forages peuvent être endommagés à cause de surchauffes, d'une mauvaise lubrification, ou d'un blocage mécanique par des roches mal évacuées et nécessiter un arrêt temporaire de l'opération de forage.
Les polymères peuvent notamment être utilisés à titre d'agents 2 en 1, ou plus, combinant plusieurs fonctions choisies parmi les suivantes:
- inhibition du gonflement des argiles et/ou consolidation des parois d'un puits ("well-bore consolidation"),
- inhibition de l'accrétion et/ou inhibition du blocage des têtes de forage (inhibition du "bit-balling"),
- lubrification,
- réduction du filtrat.
Les utilisations à titre d'agents 2 en 1 simplifient techniquement et économiquement les formulations des fluides. Les utilisations en tant qu'agents inhibant l'accrétion et lubrifiant sont particulièrement avantageuses.

### Utilisations

Dans le cadre de l'utilisation selon l'invention, le fluide de forage est de préférence un fluide pour le forage d'un puits destiné à la récupération de pétrole et/ou de gaz. La teneur en polymère dans le fluide de forage est avantageusement comprise entre 0,1% et 10% en poids, de préférence entre 0,1% et 5%, et encore plus préférablement entre 1 % et 3%.

Dans le cadre de l'utilisation selon l'invention, le polymère est un agent d'inhibition de l'accrétion des roches forées déblayées.

Dans le cadre de l'utilisation, le polymère peut être également ou alternativement un agent lubrifiant.

D'autres détails ou avantages de l'invention apparaîtront plus clairement au vu des exemples ci-dessous, sans caractère limitatif.

### EXEMPLES

Dans les exemples qui suivent, on utilise les additifs suivants:

| | |
|---|---|
| Additif 1 | Homopolymère de GMMA de masse moléculaire en poids d'environ 5600 g/mol |

### Exemple 1: Fluide comprenant un polymère

On prépare une formulation B de boue de forage à base de silicates comprenant les ingrédients suivants:

| | |
|---|---|
| Saumure | 20% |
| Anti-mousse (Bevaloide 6092) | 0,1% |
| Agent épaississant, gomme xanthane (Rhodopol 23P, Rhodia) | 0,5% |
| Silicates (Silicates 60N20, Rhodia | 5% (matière sèche) |
| Additif 1: | 1% |
| KOH ou NaOH pour ajuster le pH à12 | |

## Revendications

1. Fluide de forage comprenant un polymère, **caractérisé en ce que** le polymère est un polymère comprenant au moins 65% en poids, de préférence au moins 90% en poids, d'unités hydroxylées comprenant un groupe -OH, de formule suivante:
-CH₂-CR⁶[-X²-R⁸]-
dans laquelle:
- R⁶ est un atome d'hydrogéné ou un groupe méthyle,
- X² est un groupe de formule -CO-O-, -CO-NH- ou -C₆H₄-CH₂-
- R⁸ est un groupe hydrocarboné à au moins deux atomes de carbone, comprenant au moins deux groupes -OH, de préférence sur deux atomes de carbone consécutifs,
et où ledit fluide de forage est :
- un fluide aqueux à base de silicates ; ou
- un fluide aqueux à base de phosphates : ou
- un fluide non aqueux.

2. Fluide de forage selon la revendication 1, **caractérisé en ce que** la teneur en polymère dans le fluide de forage est comprise entre 0, 1 % et 10% en poids, de préférence entre 0, 1 % et 5%, et encore plus préférablement entre 1 % et 3%.

3. Fluide de forage selon l'une des revendications précédentes, **caractérisé en ce que** les unités hydroxylées sont choisies parmi les unités de formules suivantes:

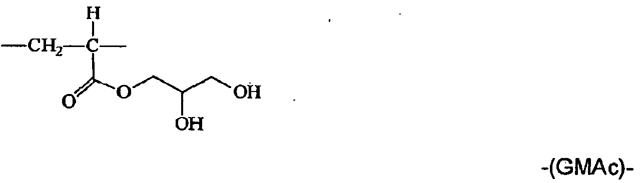

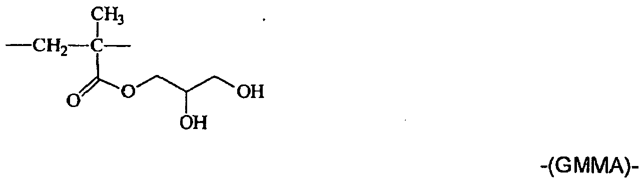

4. Fluide de forage selon l'une des revendications précédentes **caractérisé en ce que** le polymère est un homopolymère ne comprenant pas d'autres unités que les unités hydroxylées.

5. Fluide de forage selon l'une des revendications précédentes, **caractérisé en ce que** le polymère présente une masse moléculaire moyenne en poids comprise entre 1000 g/mol et 400000 g/mol, de préférence entre 2000 g/mol et 20000 g/mol, en valeur relative, mesurée par GPC calibrée avec des étalons de polyoxyde d'éthylène.

6. Fluide de forage selon l'une des revendications précédentes, **caractérisé en ce que** le fluide de forage est un fluide aqueux à base de silicates.

7. Utilisation dans un fluide de forage, tel que défini dans l'une des revendications 1, et 3 à 5, du polymère en tant qu'agent d'inhibition de gonflement des argiles, et/ou en tant qu'agent d'inhibition de l'accrétion, et/ou en tant qu'agent de contrôle de la rhéologie du fluide, et/ou en tant que réducteur de filtrats et/ou en tant qu'agent lubrifiant.

8. Utilisation selon la revendication 7, **caractérisée en ce que** le fluide de forage est un fluide pour le forage d'un puits destiné à la récupération de pétrole et/ou de gaz.

9. Utilisation selon l'une des revendications 7 ou 8 **caractérisée en ce que** la teneur en polymère dans le fluide de forage est comprise entre 0.1% et 10% en poids, de préférence entre 0,1% et 5%, et encore plue préférablement entre 1% et 3%.

10. Utilisation selon l'une des revendications 7 à 9, où le polymère est utilisé à titre d'agent de consolidation des parois du puits.

11. Utilisation selon l'une des revendications 7 à 9, **caractérisée en ce que** l'agent d'inhibition de l'accrétion est un agent évitant le blocage d'une tête de forage.

12. Utilisation selon l'une des revendications 7 à 11, **caractérisé en ce que** le fluide de forage est un fluide aqueux à base de silicates.

## Claims

1. A drilling fluid comprising a polymer, **characterized in that** the polymer is a polymer comprising at least 65% by weight, preferably at least 90% by weight, of hydroxyl units comprising an -OH group, of the following formula:
-CH₂-CR⁶[-X²-R⁸]
wherein:
- R⁶ is a hydrogen atom or a methyl group,
- X² is a group of formula -CO-O-, -CO-NH- or -C₆H₄-CH₂
- R⁸ is a hydrocarbon group with at least two carbon atoms, comprising at least two -OH groups, preferably on two consecutive carbon atoms,
and wherein said drilling fluid is:
- an aqueous fluid based on silicates; or
- an aqueous fluid based on phosphates; or
- a non-aqueous fluid.

2. The drilling fluid according to claim 1, **characterized in that** the polymer content in the drilling fluid is comprised between 0.1% and 10% by weight, preferably between 0.1% and 5%, and even more preferably between 1% and 3%.

3. The drilling fluid according to any one of the preceding claims, **characterized in that** the hydroxyl units are selected from units of the following formulae:

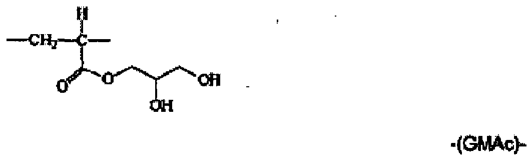

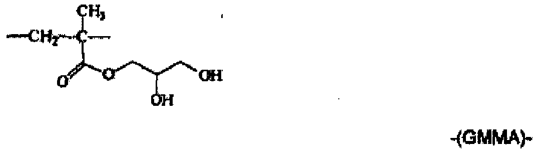

4. The drilling fluid according to any one of the preceding claims, **characterized in that** the polymer is a homopolymer not comprising any units other than the hydroxyl units.

5. The drilling fluid according to any one of the preceding claims, **characterized in that** the polymer has a weight average molecular mass comprised between 1,000 g/mol and 400,000 g/mol, preferably between 2,000 g/mol and 20,000 g/mol, as a relative value, measured by CPG calibrated with polyethylene oxide standards.

6. The drilling fluid according to any one of the preceding claims, **characterized in that** the drilling fluid is an aqueous fluid based on silicates.

7. The use in a drilling fluid, as defined in any one of claims 1, and 3 to 5, of the polymer as a clay swelling inhibition agent, and/or as an accretion inhibition agent, and/or as an agent for controlling the rheology of the fluid, and/or as a filtrate reducing agent and/or as a lubricating agent.

8. The use according to claim 7, **characterized in that** the drilling fluid is a fluid for drilling a well intended for recovery of oil and/or gas.

9. The use according to any one of claims 7 or 8, **characterized in that** the polymer content in the drilling fluid is comprised between 0.1% and 10% by weight, preferably between 0.1 % and 5%, and even more preferably between 1% and 3%.

10. The use according to any one of claims 7 to 9, wherein the polymer is used as an agent for consolidation of the walls of the well.

11. The use according to any one of claims 7 to 9, **characterized in that** the accretion inhibition agent is an agent avoiding the blocking of a well head.

12. The use according to any one of claims 7 to 11, **characterized in that** the triggering fluid is an aqueous fluid based on silicates.

## Patentansprüche

1. Bohrschlamm mit einem Polymer, **dadurch gekennzeichnet, dass** das Polymer ein Polymer ist, das mindestens 65 Gew.-%, vorzugsweise mindestens 90 Gew.-%, hydroxylierte Einheiten umfasst, die eine -OH-Gruppe umfassen, folgender Formel
-CH₂-CR⁶[-X²-R⁸]-
wobei:
- R⁶ ein Wasserstoffatom ist oder eine Methylgruppe ist,
- X² eine Gruppe der Formel -CO-O-, -CO-NH- oder -C₆H₄-CH₂- ist,
- R⁸ eine Kohlenwasserstoffgruppe mit mindestens zwei Kohlenstoffatomen ist, die mindestens zwei -OH-Gruppen, vorzugsweise auf zwei aufeinanderfolgenden Kohlenstoffatomen, umfasst,
und wobei der Bohrschlamm ist:
- ein wässriges Fluid auf der Basis von Silikaten, oder
- ein wässriges Fluid auf der Basis von Phosphaten, oder
- ein nicht wässriges Fluids.

2. Bohrschlamm nach Anspruch 1, **dadurch gekennzeichnet, dass** der Polymergehalt im Bohrschlamm zwischen 0,1 und 10 Gew.-%, vorzugsweise zwischen 0,1 und 5 Gew.-%, und noch mehr vorzugsweise zwischen 1 und 3 Gew.-% inklusive ist.

3. Bohrschlamm nach einem der vorangehenden Ansprüche, **dadurch gekennzeichnet, dass** die hydroxylierten Einheiten aus den Einheiten mit den folgenden Formeln ausgewählt sind:

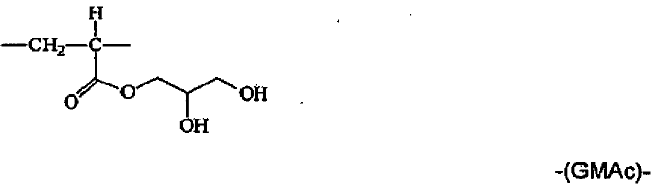

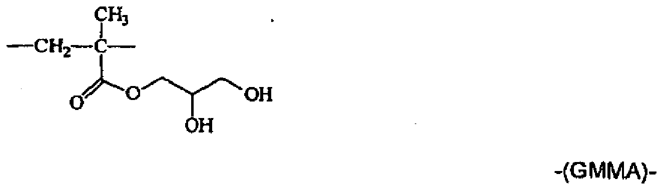

4. Bohrschlamm nach einem der vorangehenden Ansprüche, **dadurch gekennzeichnet, dass** das Polymer ein Homopolymer ist, das keine anderen Einheiten als die hydroxylierten Einheiten umfasst.

5. Bohrschlamm nach einem der vorangehenden Ansprüche, **dadurch gekennzeichnet, dass** das Polymer eine durchschnittliche molekulare Gewichtsmasse zwischen 1.000 g/mol und 400.000 g/mol, vorzugsweise zwischen 2.000 g/mol und 20.000 g/mol inklusive als relativer Wert aufweist, gemessen durch GPC, kalibriert mit Ethylenpolyoxid-Eichmaßen.

6. Bohrschlamm nach einem der vorangehenden Ansprüche, **dadurch gekennzeichnet, dass** der Bohrschlamm ein wässriges Fluid auf der Basis von Silikaten ist.

7. Verwendung in einem Bohrschlamm, wie in einem der Ansprüche 1 und 3 bis 5 definiert ist, des Polymers als Mittel zur Hemmung der Ausdehnung der Tone und/oder als Mittel zur Hemmung des Wachstums und/oder als Mittel zur Kontrolle der Rheologie des Fluids und/oder als Filtratreduktor und/oder als Schmiermittel.

8. Verwendung nach Anspruch 7, **dadurch gekennzeichnet, dass** der Bohrschlamm ein Fluid für das Bohren eines Bohrlochs ist, das zur Gewinnung von Erdöl und/oder Gas vorgesehen ist.

9. Verwendung nach einem der Ansprüche 7 oder 8, **dadurch gekennzeichnet, dass** der Polymergehalt im Bohrschlamm zwischen 0,1 und 10 Gew.-%, vorzugsweise zwischen 0,1 und 5 Gew.-%, und noch mehr vorzugsweise zwischen 1 und 3 Gew.-% inklusive ist.

10. Verwendung nach einem der Ansprüche 7 bis 9, wobei das Polymer als Mittel zur Konsolidierung der Wände des Bohrlochs verwendet wird.

11. Verwendung nach einem der Ansprüche 7 bis 9, **dadurch gekennzeichnet, dass** das Mittel zur Hemmung des Wachstums ein Mittel ist, das die Blockade eines Bohrkopfs verhindert.

12. Verwendung nach einem der Ansprüche 7 bis 11, **dadurch gekennzeichnet, dass** der Bohrschlamm ein wässriges Fluid auf der Basis von Silikaten ist.
